# EUROPÄISCHE PATENTANMELDUNG

(11) **EP 1 944 422 A2**
(43) Veröffentlichungstag der Anmeldung: **16.07.2008**
(21) Anmeldenummer: 08000351.0
(22) Anmeldetag: 10.01.2008
(51) Int. Cl.: E04B 1/80

(54) **Flächiger evakuierter Dämmkörper sowie Verfahren zur Herstellung und zur Verwendung desselben**

(30) Priorität: 10.01.2007 DE 102007001589
(71) Anmelder: va-Q-tec AG, 97080 Würzburg (DE)
(72) Erfinder: Caps, Roland, 63839 Kleinwallstadt (DE)
(74) Vertreter: Küchler, Stefan

(57) **Zusammenfassung**

Die Erfindung richtet sich auf einen Dämmkörper aus einem offenporigen, von einer Folie vollständig umhüllten und evakuierten Kern mit einer von einem Parallelflach abweichenden Form, umfassend zwei etwa entlang von zueinander parallelen Ebenen verlaufende Oberflächenbereiche, welche sich in einem zentralen Bereich überlappen, wobei der/die Folienrandbereich(e) entlang von wenigstens einer Schweißnaht miteinander verbunden ist/sind, und wobei jeder der beiden, zueinander etwa parallelen Oberflächenbereiche des Dämmkörpers die selbe Fläche, d.h. Größe, aufweist, jeweils wenigstens einen Randbereich aufweist, in dem er von dem anderen Oberflächenbereich nicht überlappt wird, sowie im Hinblick auf den Querschnittsverlauf in den Randbereichen derart gestaltet ist, dass ein zentraler, durch einander diametral gegenüberliegende Stirnseitenabschnitte mit differenzierbarem Verlauf gelegter Querschnitt durch die Umhüllungsfolie asymmetrisch ist bezüglich einer zu der Paneelgrundfläche lotrechten Mittelsenkrechten, d.h., nicht spiegelsymmetrisch.; ferner auf ein Verfahren zur Herstellung eines solchen Dämmkörpers sowie schließlich auf dessen Verwendung für die Erstellung eines Plattenverbundes.

## Beschreibung

Die Erfindung richtet sich auf einen Dämmkörper aus einem offenporigen, von einer Folie vollständig umhüllten und evakuierten Kern mit einer von einem Parallelflach abweichenden Form, umfassend zwei etwa entlang von zueinander parallelen Ebenen verlaufende Oberflächenbereiche, welche sich in einem zentralen Bereich überlappen, wobei der/die Folienrandbereich(e) entlang von wenigstens einer Schweißnaht miteinander verbunden ist/sind, und wobei jeder der beiden, zueinander etwa parallelen Oberflächenbereiche des Dämmkörpers die selbe Fläche, d.h. Größe, aufweist, jeweils wenigstens einen Randbereich aufweist, in dem er von dem anderen Oberflächenbereich nicht überlappt wird, sowie im Hinblick auf den Querschnittsverlauf in den Randbereichen derart gestaltet ist, dass ein zentraler, durch einander diametral gegenüberliegende Stirnseitenabschnitte mit differenzierbarem Verlauf gelegter Querschnitt durch die Umhüllungsfolie asymmetrisch ist bezüglich einer zu der Paneelgrundfläche lotrechten Mittelsenkrechten, d.h., nicht spiegelsymmetrisch.; ferner auf ein Verfahren zur Herstellung eines solchen Dämmkörpers sowie schließlich auf dessen Verwendung für die Erstellung eines Plattenverbundes.

Die Erfindung betrifft eine Ausformung von folienumhüllten Vakuumdämmplatten, mit der nach dem Verlegen im Flächenverbund gegenüber üblichen Vakuumdämmplatten kaum mehr Wärmeverluste im Fugenbereich entstehen, und die Befestigungstechnik dieser Platten.

Es ist bekannt, dass evakuierte Dämmkörper eine extrem gute Wärmedämmung bei geringstem Platzbedarf ermöglichen. Besonders interessant ist deren Anwendung überall dort im Gebäudebereich, wo wenig Platz vorhanden ist. Beispiele sind die Dämmung von Fußböden gegenüber dem Erdreich, wenn wenig Aufbauhöhe verfügbar ist, oder die platzsparende Dämmung von Außenwänden oder Decken.

Derartige Vakuumdämmkörper bestehen beispielsweise aus einem Kern aus gepresstem, pyrogenen Kieselsäurepulver, der in einer Hochbarrierefolie vakuumdicht eingepackt ist, vgl. bspw. die DE 100 58 566 C2. Die Hochbarrierefolie besteht vorzugsweise aus mehreren einzelnen Folienschichten, bspw. aus Polyester und Polyethylen, wobei einzelne Schichten zusätzlich mit einer metallischen Schicht bedampft sein können, um eine hohe Diffusionssperre gegen das Eindringen von Gasen und Wasserdampf zu erreichen.

Die Gestalt solcher Vakuumdämmkörper ist häufig plattenförmig, wobei die Kanten meistens rechtwinklig bzw. parallel zueinander verlaufen. Eine typische Stärke einer solchen Vakuumdämmplatte liegt bei etwa 20 mm. Damit wird ein Dämmwert von 0,25 W/m²K erreicht. Das entspricht einer Wärmeleitfähigkeit von nur 0,005 W/mK. Wird eine solche Vakuumdämmplatte mit einer hochwertigen, insbesondere metallisierten Hochbarrierefolie ausgerüstet, so steigt der Gasdruck im Inneren mit etwa 1 mbar pro Jahr an. Aufgrund der extrem kleinen Poren der mikroporösen Füllung aus pyrogener Kieselsäure verdoppelt sich die Wärmeleitfähigkeit dennoch rechnerisch erst in 50 Jahren.

Verwendet man an Stelle der metallisierten Hochbarrierefolie eine Aluminiumverbundfolie, so lässt sich der Gasdruckanstieg etwa um einen Faktor zehn verringern. Entsprechend langsamer ist der Anstieg der Wärmeleitfähigkeit. Aufgrund der hohen Wärmeleitfähigkeit der Aluminiumfolie im Verbund wird jedoch über die Ränder der Vakuumdämmplatte sehr viel Wärme abgeführt. Für eine nur 6 µm dicke Aluminiumfolie ergibt sich rechnerisch für eine Vakuumdämmplatte der Größe 1 m x 1 m ein Wärmeverlust, der einer zusätzlichen Wärmeleitfähigkeit von 0,005 W/mK entspricht. Dadurch verdoppelt sich die effektive Wärmeleitfähigkeit einer Vakuumdämmplatte mit Aluminiumfolienumhüllung. Bei Vakuumdämmplatten mit geringerer Kantenlänge erhöhen sich die Wärmeverluste über die Aluminiumfolie am Rand proportional zum Verhältnis aus Umfangslänge zu umschriebener Fläche. Trotz der extrem hohen Gas- und Wasserdampfbarriere wird daher bisher Aluminiumverbundfolie kaum für Vakuumdämmplatten verwendet. Hauptsächlich kommen metallisierte Hochbarrierefolien zur Anwendung, die am Rand nur eine geringe Wärmebrücke verursachen.

Zur Herstellung von quaderförmigen Vakuumdämmplatten könnte man loses Pulver in einen Beutel aus Hochbarrierefolie einfüllen, in einer Vakuumkammer evakuieren, verschließen und mittels einer Pressvorrichtung in Form bringen. Der Folienbeutel kann hergestellt werden, indem zwei gleich große Folien aufeinandergelegt und an drei Seiten durch Versiegelung miteinander verbunden werden. Die vierte Seite wird erst nach dem Einfüllen und Evakuieren in der Vakuumkammer versiegelt. Vorteil dieser Herstellungsmethode ist, dass die Folie an den Kanten nur wenig strapaziert wird, da sie ohne große Biegung am Rand in die Siegelnaht übergeht. Das ergibt eine hohe Funktionssicherheit. Nachteil dieser Form ist, dass die Siegelnaht senkrecht zum Rand wegsteht. Zwei ebene Platten, die mit diesen Siegelnähten ausgerüstet sind, lassen sich daher nicht ohne Lücke aneinander stoßen. Dadurch ergeben sich beträchtliche Wärmebrücken, da die Wärmeleitfähigkeit in den Fugenlücken um einen Faktor 20 höher ist als im Bereich der Vakuumdämmung.

Eine Möglichkeit, die Wärmebrücken zu verringern, besteht darin, die Vakuumdämmplatten in zwei Lagen zu verlegen. Die zweite Lage wird dabei so ausgeführt, dass die Fugen der ersten Lage von der zweiten Lage zum großen Teil abgedeckt werden. Auf diese Weise werden Dämmverluste über mehr oder weniger große Fugen weitgehend unterbunden. Ein Nachteil dieser zweilagigen Methode ist jedoch der höhere Aufwand. Eine 20 mm starke Vakuumdämmung muss durch zwei mal 10 mm starke Vakuumdämmplatten ersetzt werden. Dies bedeutet fast den doppelten Aufwand gegenüber der einlagigen Lösung: Es wird die doppelte Fläche der teuren Hochbarrierefolie benötigt und zweimal der Herstellungsaufwand einer einlagigen Anordnung. Auch das Anbringen von zwei Lagen auf einer Hausfassade ist naturgemäß aufwändiger als das Anbringen einer einzelnen Lage. Die Nutzungsdauer der doppelten Lage liegt zudem nur noch bei der Hälfte der Nutzungsdauer einer einlagigen Konstruktion, da sich die Paneeldicke halbiert hat und der Gasdruck deswegen doppelt so schnell ansteigt. Bei Anwendungen im Fassadenbereich ergibt sich zusätzlich noch das Problem, dass eine gesicherte Befestigung der Platten mit Hilfe von Tellerdübeln - wenn überhaupt - nur noch an einzelnen Punkten möglich ist, nämlich an sich überkreuzenden Fugen der ersten und zweiten Lage. Diese Stellen mit den sich überkreuzenden Fugen bilden zudem je eine Wärmebrücke aus, da sie eine durchgehende Verbindung zwischen beiden Seiten der Dämmung darstellen. Insbesondere wenn die Vakuumdämmplatten abstehende Siegellaschen aufweisen, ergibt sich an diesen Stelle eine ungedämmte quadratische Fläche mit einer Kantenlänge, die der Breite der Siegellaschen entspricht.

Konventionelle Schaumdämmstoffe werden oft mit einem Stufenfalz, d.h., einer mit Stirnseiten von stufigem Querschnitt, hergestellt, um Wärmeverluste im Bereich von Fugenspalten zu verringern. Im Prinzip kann ein solcher Stufenfalz beschrieben werden wie zwei Platten der halben Dicke, die übereinander liegen, jedoch um eine Strecke in etwa diagonaler gegeneinander verschoben sind. Die Platten sind in dieser Lage miteinander verbunden. Bei Dämmkörpern mit einer rechteckigen oder quadratischen Grundfläche gibt es vier Eckenzonen. Von diesen weisen zwei einander gegenüberliegende jeweils eine relative Dicke von etwa 0,5 auf, also etwa halb so dick wie die maximale Plattenstärke im Zentrum des Dämmkörpers; die anderen beiden Eckenzonen sind ausgespart, haben also eine Dicke von Null. Das Problem der durchgehenden Verbindung an einzelnen Stellen bleibt jedoch ebenso wie bei der zweilagigen Verlegung ungelöst. Insbesondere an den innenliegenden Hohlkehlen der Ecken mit verschwindender Dicke bildet sich je eine Wärmebrücke aus.

Aus dieser Beschreibung des Standes der Technik resultiert das die Erfindung initiierende Problem, die Nachteile der üblichen Form einer Platte mit Stufenfalz zu vermeiden, die Fugenverluste im Verbund der Vakuumdämmplatten zu minimieren sowie bessere Befestigungsmöglichkeiten an Fassaden und Decken zu schaffen.

Die Lösung dieses Problems gelingt dadurch, dass jeder der beiden, zueinander etwa parallelen Oberflächenbereiche des Dämmkörpers die selbe Fläche, d.h. Größe, aufweist, jeweils wenigstens einen Randbereich aufweist, in dem er von dem anderen Oberflächenbereich nicht überlappt wird, sowie im Hinblick auf den Querschnittsverlauf in den Randbereichen derart gestaltet ist, dass ein zentraler, durch einander diametral gegenüberliegende Stirnseitenabschnitte mit differenzierbarem Verlauf gelegter Querschnitt durch die Umhüllungsfolie asymmetrisch ist bezüglich einer zu der Paneelgrundfläche lotrechten Mittelsenkrechten, d.h., nicht spiegelsymmetrisch.

Bspw. hat ein geometrischer Körper mit mehr als sechs (ebenen) Begrenzungsflächen, insbesondere ein Körper mit zwölf oder mehr (ebenen) Begrenzungsflächen, eine von einem Parallelflach abweichende Form. Wie sich gezeigt hat, wird dadurch zwar die Geometrie komplexer; gleichzeitig steigt jedoch das Wärmedämmungsvermögen, insbesondere im Verbund mit anderen Platten. Durch den wärmetechnisch verbesserten Plattenverbund wird es möglich, den Kern in eine Umhüllungsfolie einzuschweißen, ohne dass die überstehenden Schweißnähte Probleme hinsichtlich der Wärmedämmung produzieren, wie dies bei einem Parallelflach unumgänglich wäre.

Jeder der beiden, zueinander etwa parallelen Oberflächenbereiche des Dämmkörpers sollte die selbe Fläche, d.h., das selbe Flächenmaß, aufweisen, damit im fertigen Plattenverbund an beiden Seiten der gesamten Dämmstoffschicht keine oder zumindest kaum Lücken auftreten.

Wenn jeder der beiden, zueinander etwa parallelen Oberflächenbereiche des Dämmkörpers jeweils wenigstens einen Bereich aufweist, in dem er von dem anderen Oberflächenbereich nicht überlappt wird, so kann mit diesen Bereichen stattdessen eine Überlappung mit anderen, benachbarten Dämmkörpern hergestellt werden, um durchgehende Fugen zu vermeiden. Vakuumdämmplatten, die einen derartigen Stufenfalz aufweisen, können so im Verbund verlegt werden, dass sich die Randbereiche überlappen und keine, insbesondere auch keine punktuellen Wärmebrücken entstehen.

Durch die Asymmetrie der Folie ergeben sich zueinander komplementäre Querschnittsverläufe des Dämmkerns an einander gegenüberüegenden Stirnseiten, wodurch benachbarte, identische Dämmplatten einander auch bei völlig identischer Ausrichtung überlappen können. Wie stark diese Überlappung reicht, ist von sekundärer Bedeutung - theoretisch lassen sich die nebeneinanderliegenden Platten fast bis zur Breite ihrer Randbereiche auseinanderziehen, ohne dass es zu einer durchgehenden Wärmebrücke kommt.

Denn in den Bereichen neben der tatsächlichen Überlappung entstehen zwar (Halb-) Fugen; dort steht aber immer noch der halbe Wärmewiderstand des Zentrums der Vakuumdämmplatte zur Verfügung. Daher bereiten teilweise überstehende Siegellaschen am Rand der Vakuumdämmplatte keine großen Probleme hinsichtlich der Effizienz der Wärmedämmung. Auch kann der Abstand der Einzelplatten bei Bedarf etwas variiert, insbesondere auch vergrößert werden, bspw. um Maßungenauigkeiten auszugleichen.

Dabei liegt es im Rahmen der Erfindung, dass ein zentraler, durch einander diametral gegenüberliegende Stirnseitenabschnitte mit differenzierbarem Verlauf gelegter Querschnitt durch die Umhüllungsfolie etwa punktsymmetrisch ist zu einem Mittelpunkt innerhalb der von dem Folienquerschnitt umfaßten Fläche.

Die Erfindung zeichnet sich weiterhin aus dadurch aus, dass wenigstens ein Folienbereich, der durch wenigstens (je) eine Siegelnaht von dem evakuierten Raum innerhalb des betreffenden Dämmkörpers vollständig abgetrennt ist, (jeweils) wenigstens eine Ausnehmung aufweist zum Hindurchstecken (je) eines Befestigungskörpers, zwecks (kraftschlüssiger) Festlegung des Folienteils und des damit verbundenen Vakuumdämmkörpers an einem darunter befindlichen Untergrund.

Es wurde gefunden, dass Vakuumdämmplatten gut mit Hilfe von Dübeln, Schrauben und anderen mechanischen Verbindungen sicher an einem Untergrund befestigt werden können. Zu diesem Zweck läßt man jeweils in der Nähe der dem Untergrund zugewandten Kante der Vakuumdämmplatte ein Folienteil abstehen. Ein in diesem Folienteil ggf. vorhandener, innerer Hohlraum kommuniziert nicht mit dem Inneren der Vakuumdämmplatte, so dass beim Durchdringen des Folienteils mit einem Gegenstand die Vakuumdämmplatte evakuiert bleibt. Solche Vakuumdämmplatten können mit Hilfe von Dübeln, Schrauben etc. durch die abstehenden Folienteile hindurch am Untergrund befestigt werden. Auf diese Weise lässt sich ein Dämmverbund aufbauen, der mit dem Untergrund sicher verbunden ist und auch höheren Belastungen standhält.

Es hat sich als günstig erwiesen, dass eine Seite eines von dem evakuierten Dämmkörper vollständig getrennten Folienteils oder -bereichs an eine Siegelnaht der den Dämmkörper umhüllenden Folie angrenzt, wobei das Folienteil samt Durchsteckausnehmung auf der dem evakuierten Dämmkörper gegenüber liegenden Seite liegt.

Die Erfindung empfiehlt, dass ein eine Durchsteckausnehmung aufweisendes Folienteil sich über die Länge einer Stirnseite des Dämmkörpers erstreckt und eine Breite zwischen 5 mm und 100 mm, vorzugsweise zwischen 20 mm und 50 mm aufweist.

Ein eine Durchsteckausnehmung aufweisendes Folienteil sollte aus zwei übereinander liegenden Folien bestehen, von denen sich eine als oberseitige Folienlage oberhalb des Kerns, die anderen als unterseitige Folienlage an der Unterseite des Kerns fortsetzt.

Es liegt im Rahmen der Erfindung, dass die beiden Folien eines eine Durchsteckausnehmung aufweisenden Folienbereichs oder -teils zumindest teilweise miteinander verschweißt sind, wodurch einem ungewollten Ausreißen der durchbrochenen Folienlasche(n) vorgebeugt wird.

Die Erfindung läßt sich dahingehend weiterbilden, dass der/die Durchbrüche in dem/den vorzugsweise überstehenden Folienbereich(en) oder -teil(en) jeweils einen kreisförmigen Umfang aufweisen, entsprechend dem üblichen Querschnitt von Schrauben, Dübeln, Ankern und/oder Nägeln.

Bevorzugt grenzen pro überstehendem Folienteil mindestens drei Foliennähte der Hülle direkt an den Dämmkörper an.

Für die Erstellung eines Plattenverbundes mit einer insgesamt überall etwa konstanten Dämmwirkung haben sich Dämmkörper mit einer flächigen Gestalt bewährt, deren Grundfläche einen mehreckigen Umfang aufweist, und mit zwei Oberflächenbereichen, welche parallel zu der Grundfläche des Dämmkörpers verlaufen und sich wenigstens in einem zentralen Bereich überlappen, dessen Umfang mehrere Randlinienabschnitte mit jeweils einem stetigen, vorzugsweise differenzierbaren Verlauf aufweist sowie mehrere Eckbereiche, welche die stetigen Randlinienabschnitte voneinander trennen. Solche Dämmkörper lassen sich lückenlos neben- und übereinander anordnen, mit einer überall - bis auf ggf. vorhandene, möglichst geringe Schwächungen im Bereich von eingesetzten Magnetkörpern oder Metallblechen - gleichen Stärke der Dämmschicht. Dabei bildet der Überlappungsbereich beider zueinander paralleler Oberflächen eines Dämmkörpers denjenigen Bereich, wo im fertigen Plattenverbund keine Überlappung mit benachbarten Dämmkörpern stattfindet.

Für die Erstellung eines Plattenverbundes mit einer insgesamt überall etwa konstanten Dämmwirkung haben sich Dämmkörper mit einer flächigen Gestalt bewährt, deren Grundfläche einen mehreckigen Umfang aufweist, und mit zwei Oberflächenbereichen, welche parallel zu der Grundfläche des Dämmkörpers verlaufen und sich wenigstens in einem zentralen Bereich überlappen, dessen Umfang mehrere Randlinienabschnitte mit jeweils einem stetigen, vorzugsweise differenzierbaren Verlauf aufweist sowie mehrere Eckbereiche, welche die stetigen Randlinienabschnitte voneinander trennen. Solche Dämmkörper lassen sich lückenlos neben- und übereinander anordnen, mit einer überall - bis auf ggf. vorhandene, möglichst geringe Schwächungen bspw. im Bereich von eingesetzten Magnetkörpernm, Metallblechen od. dgl. - gleichen Stärke der Dämmschicht. Dabei bildet der Überlappungsbereich beider zueinander paralleler Oberflächen eines Dämmkörpers denjenigen Bereich, wo im fertigen Plattenverbund keine Überlappung mit benachbarten Dämmkörpern stattfindet.

Damit die Dämmstoffschicht auch in den Überlappungsbereichen zwischen benachbarten Dämmkörpern nicht geschwächt wird, ist vorgesehen, dass die einander gegenüberliegenden Bereiche zwischen einer Stirnseite und der jeweils nächstgelegenen Randlinie des zentralen Überlappungsbereichs zueinander komplementäre Querschnitte aufweisen. Werden solchermaßen identische Dämmkörper mit identischer Ausrichtung innerhalb einer Ebene nabeneinander direkt aneinandergelegt, so ergänzen sie sich in den Überlappungsbereichen jeweils zur vollen Plattenstärke, weil die Gesamtdicke der hinsichtlich der Komplementarität miteinander korrespondierenden Abschnitte der einander gegenüberliegenden Bereiche zwischen einer Stirnseite und der jeweils nächstgelegenen Randlinie des zentralen Überlappungsbereichs etwa gleich dem Abstand zwischen den beiden Oberflächenbereichen in dem zentralen Überlappungsbereich ist.

Ferner sollte in der Stirnseite eines Dämmkörpers eine der Anzahl der Randlinienabschnitte des zentralen Überlappungsbereichs entsprechende Anzahl von Randabschnitten vorgesehen sein, die vorzugsweise jeweils größer sind als die entsprechende Randlinie des zentralen Überlappungbereichs. Solchermaßen kann entlang des gesamten, seine Grundfläche umlaufenden Umfangs eines Dämmkörpers ein zwecks Überlappung mit den jeweils angrenzenden Dämmkörpern querschnittlich verjüngter Randbereich vorgesehen sein, so dass an keiner der vorzugsweise vier Kanten einer bspw. rechteckigen Dämmplatte im fertigen Plattenverbund eine durchgehende Fuge verbleibt.

Dazu trägt ebenfalls bei, dass jeder Randabschnitt an seinen über die Randlinie des zentralen Überlappungsbereichs überstehenden Enden eine Dicke aufweist, die geringer ist als der Abstand zwischen den beiden Oberflächenbereichen in dem zentralen Überlappungsbereich, vorzugsweise jedoch an allen Eckbereichen endlich bleibt, d.h., nicht zu Null wird.

Vorzugsweise hat der Kern in der Draufsicht eine mehreckige, vorzugsweise viereckige Gestalt. Rechteckförmige oder quadratische Dämmkörper lassen sich zu einem lückenlosen Plattenverbund aneinandersetzen. Im allgemeinen Fall muß der erfindungsgemäße Dämmkörper jedoch nicht ausschließlich rechteckförmig oder quadratisch sein, sondern ließe sich auch trapez- oder rautenförmig gestalten, wobei einander gegenüberliegende Seiten vorzugsweise jeweils gleich lang sein sollten. Selbst Dämmkörper mit der Grundfläche eines (regelmäßigen) Sechsecks ließen sich in einem Plattenverbund lückenlos aneinanderfügen. Eine oder mehrere Ecken könnten auch ausgespart, d.h., nicht mit Dämmmaterial belegt sein.

Es hat sich als günstig erwiesen, dass jeder Randabschnitt an seinen über die Randlinie des zentralen Überlappungsbereichs überstehenden Enden eine Dicke aufweist, die an wenigstens drei Eckbereiche (A,B,C,D) des Dämmkerns endlich bleibt, d.h., nicht zu Null wird, aber jeweils geringer ist als der Abstand zwischen den beiden Oberflächenbereichen in dem zentralen Überlappungsbereich. Die Eckbereiche benachbarter Dämmkörper liegen im Plattenverbund aufeinander, so dass sämtliche Wärmebrücken vermieden sind. Aus Gründen der Stabilität sollte jedoch die Dicke wenigstens dreier Eckbereiche (A,B,C,D) des Dämmkerns mindestens 5% der Gasamtdicke des Dämmkörpers betragen.

Im Hinblick auf eine möglichst gleichbleibende Dicke des fertigen Plattenverbundes sollte die Summe der Dicken der vier Eckbereiche maximal bei der Dicke der mittleren Zone der Vakuumdämmplatte liegen. Somit sind die Dämmungseigenschaften des fertigen Plattenverbundes homogen.

Ferner empfiehlt die Erfindung, dass wenigstens drei, vorzugsweise alle Eckbereiche (A,B,C,D) des Dämmkerns eine Dicke aufweisen, die kleiner ist als die Dicke des zentralen Überlappungsbereichs der beiden zueinander parallelen Oberflächenbereiche. Dadurch können mehrere Eckbereiche einander überlappend angeordnet werden.

Die Erfindung läßt sich dahingehend weiterbilden, dass bei einer relativen (genormten) Plattenstärke in der zentralen Zone von 1, die jeweils an der Ecke A angrenzenden und in einer ersten Plattenebene liegenden, querschnittlich verjüngten Randbereiche A-B und A-D eine relative Dicke h aufweisen, und die jeweils an die Ecke C angrenzenden und in einer zweiten Plattenebene liegenden, querschnittlich verjüngten Randbereiche B-C und C-D eine relative Dicke (1-h) aufweisen, wobei die Summe der relativen Dicken zweier einander benachbarter Eckbereiche A und B in etwa der Dicke h und die Summe der relativen Dicken der übrigen beiden Eckbereiche C und D jeweils in etwa der relativen Dicke (1-h) entspricht. Somit lassen sich benachbarte Dämmkörper maximal eng zusammenschieben, um Wärmebrücken zu vermeiden.

Vorzugsweise sind die Eckbereiche A und B untereinander jeweils gleich dick, und auch die Eckbereiche C und D sind untereinander jeweils gleich dick, so dass sich beim Zusammensetzen eine vielfache Überlappung realisieren läßt.

Eine maximale Überlappung in den Eckbereichen ist möglich, wenn die Eckbereiche A, B, C und D jeweils gleich dick sind, insbesondere, wenn sie außerdem jeweils in etwa einem Viertel der Dicke des zentralen Überlappungsbereichs entsprechen.

Wenn alle vier Randbereiche außerhalb der Eckzonen A, B, C, D in etwa gleich dick sind, ist die mechanische Stabilität in allen Randbereichen etwa konstant hoch.

Zum Zweck einer optimal dichten Wärmedämmung im fertigen Plattenverbund sieht die Erfindung weiterhin vor, dass alle vier Randbereiche außerhalb der Eckzonen A, B, C, D in etwa halb so dick sind wie die Plattenstärke in der zentralen Zone.

Allerdings sollte dazu die höhenmäßige Lage der Eckbereiche A, B, C, D unterschiedlich sein, bspw. in der Reihenfolge A-B-D-C, wobei vorzugsweise A und C mit der zentralen Unterseite bzw. Oberseite des Formkörpers abschließen, oder die Höhen der Eckbereiche A, B, C, D sind in der Reihenfolge A-D-B-C angeordnet, wobei A und C mit der zentralen Unterseite bzw. Oberseite des Formkörpers (bündig) abschließen.

Ein bevorzugtes Maß für die Stärke in dem zentralen Überlappungsbereich beträgt zwischen 5 und 40 mm, bevorzugt zwischen 10 und 20 mm, insbesondere etwa 15 mm.

Für die Abmessungen eines erfindungsgemäßen Dämmkörpers empfiehlt die Erfindung eine Länge zwischen 0,1 m und 2 m, bevorzugt zwischen 1 m und 1,2 m; sowie eine Breite zwischen 0,1 m und 2 m, bevorzugt zwischen 0,5 m und 0,8 m.

Die Breite der querschnittlich verjüngten Randbereiche kann zwischen 1 cm und 20 cm gewählt werden, bevorzugt zwischen 5 cm und 10 cm, wobei zwei einander gegenüberliegende Randbereiche bevorzugt gleich breit sein sollen.

Um die Umhüllungsfolie keiner übermäßigen Belastung auszusetzen, sollten die Ecken und Kanten des Dämmkörpers abgerundet sein.

Der Dämmkörper sollte im Bereich seiner Stirnseiten frei von Nuten sein, damit er beim Zusammensetzen mit anderen Dämmkörpern zu einem Plattenverbund nicht seitlich, d.h. parallel zu seiner Grundfläche, verschoben werden muß, was leicht zu Verletzungen der dünnen Hüllfolie führen könnte und die Unbrauchbarkeit des betreffenden Dämmkörpers nach sich zöge. Zu den Grundflächen hin offene Nuten können dagegen Sinn machen, wenn ein Dämmkörper während oder nach seiner Fertigstellung gewölbt werden soll.

Ein weiteres Merkmal der Erfindung besteht darin, dass der gesamte Kern aus dem selben Material besteht, bspw. aus pyrogener Kieselsäure, Fällungskieselsäure oder Perliten, oder aus Mischungen derselben, gegebenenfalls mit zugesetzten Trübungsmitteln und Trocknungsmitteln. Dadurch ist die Herstellung des erfindungsgemäßen Dämmkörpers erheblich vereinfacht, und es ergeben sich homogene Dämmungseigenschaften, was der bestmöglichen Dämmwirkung entspricht.

Andererseits kann die Füllung aus einem Pulver bestehen, das erst innerhalb der Hülle durch Pressen geformt wurde.

Indem der gesamte Kern aus einem einzigen Stück bzw. Preßling besteht, wird die mechanische Stabilität optimiert. Auch sollten keine Kammern oder sonstige - evtl. sogar druckmäßig - voneinander getrennte Zonen innerhalb des Kerns vorhanden sein. Eine homogene Kernstruktur hat sich für die Erfindung am vorteilhaftesten erwiesen, unter anderem auch deswegen, weil damit die Gestalt des Kerns stufenlos variiert werden kann und nicht einem vorgegebenen Raster zu folgen hat.

Es liegt im Rahmen der Erfindung, dass im Bereich der zu einem Untergrund, bspw. einer Wand, Decke od. dgl., hin verlagerten Randbereiche mindestens (je) eine den Dämmkörper vollständig durchsetzende Ausnehmung vorgesehen ist, zum Ein- oder Hindurchstecken von Mitteln zur Befestigung des Dämmkörpers an dem Untergrund. Dazu werden z.B. die beiden Folien des Folienbeutels in dem späteren Randbereich kreisförmig miteinander versiegelt, bspw. in dessen Mitte. In der Mitte des versiegelten Bereichs wird ein Loch ausgestanzt, durch das später ein Befestigungsmittel, bspw. eine Schraube oder ein Dübel geführt werden kann. Der Durchmesser des ausgestanzten Lochs wird höchstens so groß gewählt, dass darum herum noch ausreichend gesiegelte Fläche vorhanden ist.

Eine Befestigungsschraube oder ein Befestigungsdübel ist mit einem Halteteller versehen, der in der ausgesparten Höhlung des wandnahen Randbereichs eines Dämmkörpers 1 plaziert werden kann. Damit wird diese Seite des Dämmkörpers fixiert. Im Plattenverbund deckt der darauf liegende Randbereich den Halteteller ab und sorgt damit für dessen Dämmung. Auf diese Weise entsteht durch eine derartige Schrauben- oder Dübelhalterung keine Wärmebrücke.

Eine weitere Variante der Erfindung sieht vor, dass als Halteteller ein Magnet verwendet wird. Bevorzugt wird eine runde Magnetscheibe mit einem Montageloch in der Mitte verwendet, welches von dem Schaft der Befestigungsschraube od. dgl. durchgriffen wird, um den Magnet zu befestigen. Die Magnetscheibe sollte gerade eine solche Höhe aufweisen, dass sie nach dem Einlegen und Fixieren in der Aussparung in etwa eben mit dem wandnahen Randbereich abschließt. Auf diese erste Dämmplatte kann nun eine weiteren Dämmplatte mit einem wandfern liegenden Randbereich aufgesetzt werden.

In den wandfern liegenden Randbereichen eines Dämmkröpers läßt sich wenigstens eine magnetische oder magnetisierbare Metallplatte zwischen Hüllfolie und Dämmkern einlegen, insbesondere dort, wo im fertigen Plattenverbund der wandferne Randbereich über der Stelle zu liegen kommt, an welcher der wandnahe Randbereich des benachbarten, aber identischen Dämmkörpers befestigt ist. Ein solches, magnetisierbares Eisenplättchen hat einen Durchmesser von z.B. 40 mm und eine Stärke von ca. 0,5 mm bis 2 mm. Dadurch wird nun auch der wandfern liegende Randbereich der zweiten Dämmplatte vom magnetischen Haltekopf angezogen und mit der Wand kraftschlüssig verbunden.

Grundsätzlich kann ein erfindungsgemäßer Dämmkörper mittels Magnetkraft an einem Untergrund befestigt oder befestigbar sein. Diese Befestigungstechnik kann entweder alleine realisiert sein oder zusätzlich zu anderen Befestigungsmitteln wie bspw. formschlüssigen, mechanischen Verankerungen (Schrauben, Dübel) oder Klebstoff gewählt werden.

Demnach werden Magnete zur Fixierung und/oder Halterung von Dämmkörpern an Wänden od. dgl. eingesetzt. Zum Befestigen von Vakuumdämmplatten an senkrechten Wänden oder an Decken hängend werden hierbei Magnete oder magnetisierbare Materialien in Vakuumdämmplatten eingebaut. Die Magnete können zum einen der Fixierung von Vakuumdämmplatten an senkrechten Wänden dienen, wenn die Abbindezeit von Klebern überbrückt werden muss. Zum anderen können die Magnete auch als permanente Befestigung zum Einsatz kommen. Besonders vorteilhaft ist der Einsatz von Magneten in Vakuumdämmplatten mit stufenförmigem Randquerschnitt, wenn diese im Bereich der dünnen Randzonen eingesetzt werden. Damit können größere senkrecht stehende Flächen ohne Wärmebrücken schnell und sicher mit Vakuumdämmplatten belegt werden.

Es hat sich als günstig erwiesen, dass im Inneren des Dämmkörpers, insbesondere zwischen dessen Außenhülle und seinem Dämmkern, ein Magnet eingebaut ist. Dabei wird der innenliegende Magnet von einem außenliegenden magnetisierbaren Blech- oder Metallteil oder Magneten angezogen, das fest mit dem Untergrund verbunden ist. Der innere Magnet sollte permanentmagnetisch sein, bspw. ferromagnetisch, vorzugsweise hartmagnetisch, insbesondere mit einer der dem Untergrund zugewandten Plattenaußenseite zugewandten Polarisierung, also einem magnetischen Nord- oder Südpol möglichst nahe an der dem Untergrund zugewandten Außenseite des betreffenden Dämmkörperabsschnittes. Ein als Pendant dienendes, äußeres Blech- oder Metallteil sollte aus einem ferromagnetischen, insbesondere weichmagnetischen Material bestehen, so dass es von der Magnetkraft des Magneten innerhalb des Dämmkörpers magnetisiert und dann angezogen wird. Ein äußerer Permanentmagnet sollte dagegen - wie ein innerer Magnet auch - nicht nur ferromagnetisch, sondern möglichst hartmagnetisch sein, damit er seine Magnetkraft möglichst lange beibehält; dabei ist darauf zu achten, dass im Einbauzustand einander entgegengesetzte Magnetpole einander zugewandt sind, so dass ein magnetischer Nordpol des einen Magneten möglichst dicht an einem magnetischen Südpol des anderen Magneten liegt und im Idealfall nur durch die dünne Hochbarrierefolie des Dämmkörpers davon getrennt ist.

Andererseits ist es auch möglich, dass im Inneren des Dämmkörpers, insbesondere zwischen dessen Außenhülle und seinem Dämmkern, ein magnetisierbares Blechteil, insbesondere aus einem ferromagnetischen Material, angebracht ist, das von einem äußeren Magneten angezogen wird, der fest mit dem Untergrund verbunden ist.

Ein quader- und/oder plattenförmiger Dämmkörper zeichnet sich dadurch aus, dass ein außenliegendes Blechteil derart an einer Wand od. dgl. angeordnet, insbesondere befestigt ist, dass eine Oberfläche des Dämmlörpers im wesentlichen bündig mit der Wand od. dgl. abschließt.

Im Rahmen einer anderen Ausführungsform eines quader- und/oder plattenförmigen Dämmkörpes ist vorgesehen, dass ein außenliegender Magnet derart an einer Wand od. dgl. angeordnet ist, vorzugsweise in einer Vertiefung angebracht, insbesondere befestigt ist, dass eine Oberfläche des Dämmkörpers bündig mit der Wand abschließt.

Der in dem Dämmkörper angeordnete Magnet hat - wie auch ein dort ggf. angeordnetes Blechteil - bevorzugt eine etwa flächige Gestalt, bspw. in der Form einer Tablette. Er sollte ganz oder zumindest überwiegend innerhalb einer Vertiefung des Dämmkerns aufgenommen sein, damit er keine (deutlich) merkliche Ausbuchtung der Folie des Dämmkörpers verursacht. Andererseits sollte er nicht zu tief sein, damit im Bereich der Ausnehmung die Dämmung des Kernmaterials nicht zu stark geschwächt wird.

Die Erfindung empfiehlt die Verwendung von Magneten aus Ferrit oder aus einem Material auf der Basis von Neodym. Während Ferrit-Magnete preiswerter sind, entwickeln Neodym-Magnete höhere Felddichten und Haftkräfte. Damit lassen sich bei kleinsten Abmessungen hohe magnetische Feldstärken und Haftkräfte realisieren.

Ein Verfahren zur Herstellung eines erfindungsgemäßen Dämmkörpers zeichnet sich dadurch aus, dass in einer vakuumdichten Folie das Dämmpulver eingefüllt, evakuiert, die Hülle verschlossen und in einer evakuierten Kammer verpresst und geformt wird.

Die Erfindung sieht ferner die Verwendung mehrerer erfindungsgemäßer, vorzugsweise identischer Dämmkörper zur Herstellung eines Plattenverbundes vor, derart, dass sich die dünn ausgeführten Stufenfalze des Dämmkörpers teilweise oder ganz überlappen.

Im Rahmen einer bevorzugten Ausführungsform ist vorgesehen, dass bei Erstellung eines Plattenverbundes aus erfindungsgemäßen Dämmkörpern an bestimmten Stellen insgesamt vier Eckbereiche von vier unterschiedlichen, im Plattenverbund direkt benachbarten Dämmkörpern aufeinanderliegen.

Schließlich entspricht es der Lehre der Erfindung, dass bei Erstellung eines Plattenverbundes aus erfindungsgemäßen Dämmkörpern an bestimmten Stellen zwei Ecken von zwei Dämmkörpern sowie eine Längslasche eines dritten Dämmkörpers übereinander liegen bzw. einander überlappen.

Weitere Merkmale, Eigenschaften, Vorteile und Wirkungen auf der Basis der Erfindung ergeben sich aus der folgenden Beschreibung einiger bevorzugter Ausführungsformen sowie anhand der Zeichnung. Hierbei zeigt:
- Fig. 1: einen im Rahmen der Erfindung verwendbaren Dämmkern in einer perspektivischen Darstellung;
- Fig. 2: eine Draufsicht auf einen erfindungsgemäßen Dämmkörper mit an zwei Stirnseiten über den Grundkörper überstehenden Folienlaschen, welche mit Durchdringungen versehen sind;
- Fig. 3: eine perspektivische, teilweise abgeschnittene Ansicht auf einen Plattenverbund aus erfindungsgemäßen Dämmkörpern, die mittels je einer abstehenden Folienlasche an einem Untergrund befestigt sind und sich in ihren Randbereichen gegenseitig überdecken;
- Fig. 4: den Dämmkern einer abgewandelten Ausführungsform der Erfindung in einer perspektivischen Darstellung;
- Fig. 5: eine Draufsicht auf einen erfindungsgemäßen Dämmkörper aus Fig. 4;
- Fig. 6: einen Querschnitt durch eine Dämmplatte gemäß einer weiteren Ausführungsform der Erfindung, mit einem innenliegenden, magnetisierbaren Metallblech, das über einen äußeren Magneten an einer Wand gehalten wird (oben), bzw. mit einem innenliegenden Magneten, der von einem an der Wand fixierten, magnetisierbaren Blech angezogen wird (unten); sowie
- Fig. 7: einen Querschnitt durch einen Dämmaufbau mit aufeinanderliegenden Stufenfalzplatten mit einer Befestigung mittels Magnettellerdübeln und Einlegescheiben aus magnetisierbarem Metall.

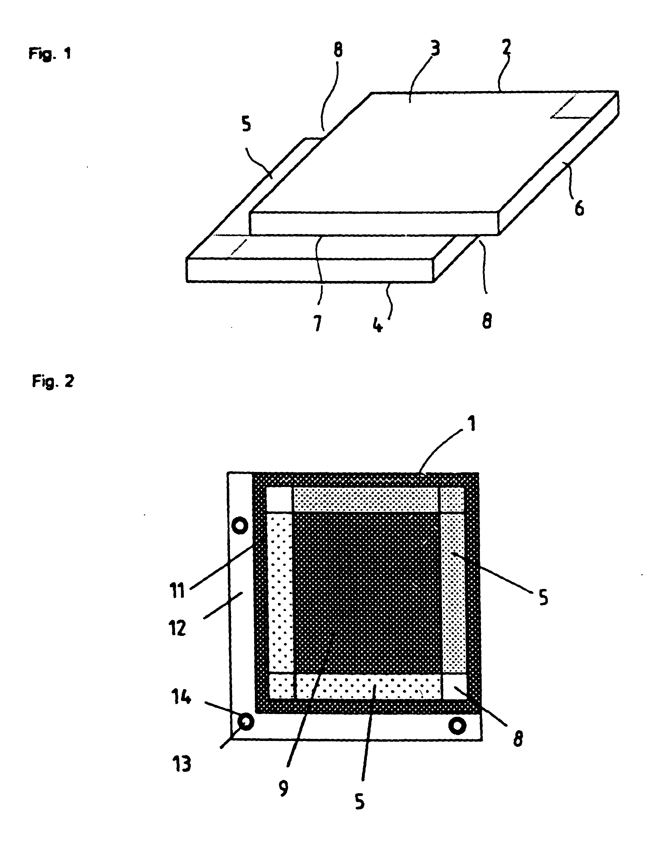

Ein bevorzugtes Anwendungsgebiet der Erfindung bilden plattenförmige Vakuumdämmkörper 1 mit einem abgestuften Randverlauf. Solche Vakuumdämmkörper 1 verfügen über einen vorzugsweise vorgeformten, plattenförmigen Kern 2, wie er in Fig. 1 zu sehen ist, aus einem offenporigen bzw. porösen Material, bspw. pyrogener Kieselsäure, ggf. mit Zusätzen, vorzugsweise aus einem Pulver durch Pressen geformt. Vorzugsweise hat der Kern 2 keine exakt quaderförmige Gestalt, sondern er hat eine flächige Gestalt, deren Grundfläche einen mehreckigen Umfang aufweist. Parallel zu dieser Grundfläche verlaufen zwei Oberflächenbereiche, nämlich die Oberseite 3 und die Unterseite 4, welche sich in einem zentralen Bereich überlappen. Dieser Überlappungsbereich beider zueinander paralleler Oberflächen 3, 4 eines Dämmkörpers 1 bildet denjenigen Bereich, wo im fertigen Plattenverbund keine Überlappung mit benachbarten Dämmkörpern 1 stattfindet, im Gegensatz zu dem Randbereich 5 des Kerns 2 nahe der Umfangslinie der Grundfläche des Kerns 2 bzw. dessen rundumlaufender Stirnseite 6. In diesem Randbereich 5 ist der Querschnitt des Kerns 2 reduziert, insbesondere stufig auf etwa die halbe Plattenstärke reduziert. Dabei ist die Oberseite 3 gegenüber der Unterseite 4 etwa diagonal zu der Grundfläche verschoben, so dass gegenüber zwei Stirnseiten 6 die Oberseite 3 zurücktritt, gegenüber den anderen beiden Stirnseiten 6 dagegen die Unterseite 4. Zwischen der betreffenden Stirnseite 6 und der jeweils zurücktretenden Ober- oder Unterseite 3, 4 ergibt sich jeweils eine Hohlkehle 7. An den beiden Ecken 8, wo gegenüber den beiden angrenzenden Stirnseiten 6 unterschiedliche Oberflächen 3, 4 zurücktreten, entsteht überdies in der Draufsicht eine Aussparung 8, wie in Fig. 1 bspw. an der Ecke rechts vorne zu erkennen ist. Somit treffen sich an den Eckbereichen jeweils zwei Randbereiche 5 von etwa gleicher Dicke. Diese liegen im Bereich von zwei einander gegenüber liegenden Ecken etwa auf der selben Höhe, gehen also nahtlos ineinander über, während sie an den beiden übrigen Ecken etwa um die halbe Stufendicke gegeneinander versetzt sind.

Da einander gegenüberliegende Randbereiche 5 etwa gleiche Breite haben, lassen sich Dämmkörper 1 mit einer durch einen derartig gestalteten Kern 2 definierten Form in einem Plattenverbund lückenlos neben- und übereinander anordnen, mit einer überall gleichen Stärke der Dämmschicht.

Dieser Kern 2 ist in eine luftdichte Folie 9 eingehüllt, evakuiert und sodann hermetisch verschlossen, um das enthaltene Vakuum zu konservieren. Die Umhüllungsfolie 9 kann bspw. durch zwei aufeinandergelegte Einzelfolien 10 gebildet sein, von denen eine an der Oberseite 3 des Kerns 2 liegt, die andere an dessen Unterseite 4. An dem umlaufenden Rand 6 der Kernplatte 2 werden diese Folienlagen 10 dicht miteinander verschweißt und bilden eine Tasche, worin der Kern aufgenommen ist. Vor dem vollkommenen Verschließen dieser Tasche wird deren innerer, von dem Kern 2 gefüllter Hohlraum evakuiert. Natürlich könnte die Hüllfolie 9 auch auf anderem Wege angefertigt werden, bspw. mittels eines den Kern 2 umgebenden Schlauchs oder durch Einschlagen des Kerns 2 in eine einzige Folienbahn. Bei dem bevorzugten Herstellungsverfahren - Zusammenschweißen von zwei etwa deckungsgleichen Einzelfolien - ergibt sich eine rundumlaufende Schweißlasche 11, bspw. von rechteckigem Verlauf, wobei im Bereich der Aussparungen 8 jeweils die beiden Einzelfolien 4 direkt aufeinander liegen. Die Siegelnaht 11 der fertigen Vakuumdämmplatte 1 umschreibt deren Umfang auf vier Seiten als Rechteck.

Entlang von vorzugsweise zwei aneinandergrenzenden Strinseiten 6 stehen Bereiche 12 der doppellagigen Folie 3 jedoch über die eigentliche Schweißlasche 11 nach außen über, bspw. um etwa 2 bis 5 cm.

Diese überstehenden Folienbereiche 12 sind jeweils durch die Siegelnaht 11 von dem mit dem Kern 2 gefüllten Hohlraum innerhalb des evakuierten Körpers 1 abgetrennt, so dass es möglich ist, in diesen Bereichen eine oder mehrere Durchsteckausnehmungen 13 anzuordnen.

Diese Durchsteckausnehmungen 13 haben jeweils die Gestalt eines von einem endlosen Rand 14 vollständig umlaufenden Lochs in jeder der beiden, übereinander liegenden Folienlagen 9, 10. Um ein Ausreißen des Randes 14 zu vermeiden, kann dieser verstärkt sein, bspw. durch je eine rundumlaufende Verschweißung. Darin könnte bei Bedarf auch ein Ring eingelegt und mit eingesiegelt sein, bspw. aus einem in sich geschlossenen Metalldraht. Andererseits wäre es auch möglich, einen solchen Ring auch aufzukleben oder anderweitig festzulegen.

Jede Durchsteckausnehmung 13 kann von jeweils mindestens einem Befestigungskörper 15 durchdrungen werden, bspw. von dem Schaft einer Schraube.

Diesem (-n) Befestigungskörper(n) 15 obliegt es, den überstehenden Folienbereich 12 und somit auch den damit verbundenen Dämmkörper 1 kraftschlüssig mit einer Tragkonstruktion zu verbinden, bspw. einem darunter liegenden Untergrund 16 wie einer Wand, Decke od. dgl.

Dabei liegen die überstehenden Folienbereiche 12 direkt flach an dem Untergrund 16 an und können daher ihrerseits von einem weiteren Dämmkörper 1 überdeckt werden. Denn die Folienbereiche 12 stehen vorzugsweise nur an der oder den Kantenbereichen 2 gegenüber der umlaufenden Schweißlasche 11 über, wo der betreffende Randbereich 5 an die dem Untergrund 16 zugewandte Unterseite 4 des Dämmkörpers 1 angrenzt, während dort die Oberseite 3 stufig zurücktritt. Dabei stehen die Folienbereiche 12 jeweils um ein Maß, insbesondere eine Breite, von vorzugsweise etwa 10 bis 50 mm über die rundumlaufende Schweißlasche 11 über. Diese abstehenden Schweißlaschen 11 ihrerseits weisen eine typische Breite von etwa 1 cm auf.

Da bei einem derartigen Dämmkörper 1 im Randbereich 5 nur etwa die Hälfte der Plattendicke vorhanden ist, liegt der abstehende Folienbereich 12 dem Untergrund 16 jedenfalls deutlich näher als der Oberseite 3.

Vorzugsweise werden Befestigungsmittel 15 mit wenig auftragenden Dübeltellern oder Schraubenköpfe mit Einlagescheiben verwendet, so dass beim Überlappen der Dämmkörper 1 keine Druckstellen entstehen. Der nachfolgende Dämmkörper 1 deckt diese Befestigungsmittel 15 und die angrenzende Fuge 17 dann vollständig ab, so dass keine Wärmebrücken entstehen.

Die gegenseitige Überdeckung benachbarter Dämmkörper 1 erlaubt eine sichere Befestigung derselben, ohne dass dabei Wärmebrücken entstehen. Natürlich könnte die mechanische Befestigung mit Klebemitteln kombiniert werden.

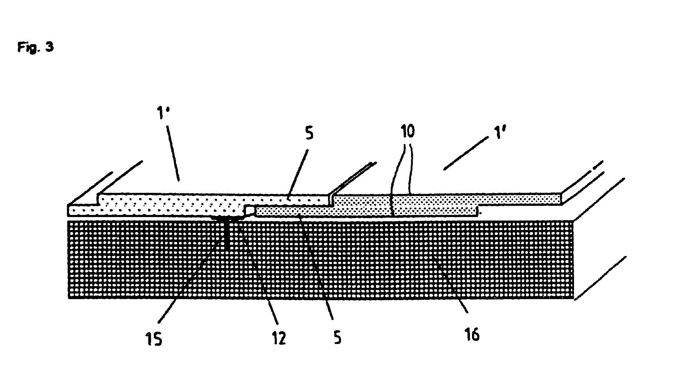

Eine Alternative stellt die Ausführung eines Dämmkörpers 1' nach Fig. 3 dar, wo ein überstehender Folienbereich 12 nur entlang einer einzigen Stirnseite 6 des Dämmkörpers 1' verläuft, insbesondere an einer derartigen Stirnseite 6, wo die dem Untergrund 16 abgewandte Oberseite 3 gegenüber der Unterseite 4 zurücktritt. Die Vakuumdämmplatte 1' wird - an diesem Folienbereich 12 hängend - an zwei oder mehr Befestigungspunkten 13 an einer Wand 16 befestigt.

Ein Plattenverbund wird erstellt, indem z.B. an die in Fig. 3 rechts dargestellte Platte 1' eine weitere, gleichartige Platte 1' links angefügt wird. Die weitere Platte 1' wird so weit über den linken Randbereich 5 der ersten Platte 1' geschoben, bis die Schweißlasche 11 eines Dämmkörpers 1' an den Grundkörper des jeweils anderen Dämmkörpers 1' stößt. Gegebenenfalls kann auch eine größere Fläche des angefügten, plattenförmigen Dämmkörpers 1' mit dem Untergrund 16 oder dem teilweise darunter liegenden, ersten Dämmkörper 1' mit einem geeigneten Kleber verklebt werden. Wenn eine Reihe fertig gestellt ist, wird eine nächste Reihe angeschlossen, wobei sich die waagrecht verlaufenden Randbereiche 5 jeweils überlappen.

Unter die gegenüber dem Untergrund 16 erhabenen Stirnseiten 6 der Anfangsplattenreihe kann eine konventionelle Schaumdämmplatte der halben Dicke gelegt werden, um den dortigen Hohlraum zu schließen. Alternativ können für die erste Plattenreihe auch Dämmkörper 1' verwendet werden, deren an der Außenkante des Plattenverbundes liegenden Stirnseiten 6 ebene sind, also keine Hohlkehlen 7 aufweisen. Das gleiche gilt auch für die Plattenreihe an der gegenüberliegenden Außenkante des Plattenverbunds.

Als Dämmkörper 1 mit Randbereichen 5 ohne einander überlappende Ober- und Unterseiten 3, 4 eignen sich vorwiegend dünnere Vakuumdämmplatten 1, da sich die Hüllfolie 9 in diesem Fall noch gut an die abgestufte Form der jeweiligen Kernplatte 2 anpasst und gleichzeitig die der Befestigung dienenden, überstehenden Folienbereiche 12 nahe am Untergrund 16 liegen. In dieser Hinsicht bevorzugte Plattenstärken liegen zwischen 5 mm und 20 mm, insbesondere zwischen 10 mm und 15 mm. Bei diesen Plattendicken wird die Hüllfolie 9 am wenigsten durch Zug, Knittern und/oder durch sonstige, mechanische Belastungen gestresst.

Besonders vorteilhaft ist es, für die Dämmkörper 1 Umhüllungsfolien 9 zu verwenden, die bereits mit einem Vlies kaschiert sind, insbesondere an ihrer jeweiligen Außenseite. Dadurch ergeben sich bessere Haftbedingungen für den weiteren Aufbau z.B. eines Putzträgers. Letztendlich sind Fassadenaufbauten mit einer Stärke von etwa 3 cm möglich, wobei etwa 2 cm auf die Vakuumdämmplatten 1 entfallen und etwa 1 cm auf den Putz mit Putzträger.

Die Ausformung eines Dämmkörpers 1 kann mittels einer Pressform in der Vakuumkammer erfolgen.

Besonders vorteilhaft lässt sich die Erfindung bei der Verarbeitung von Pulvern zu Vakuumdämmplatten 1 verwenden. Das Pulver, z.B. pyrogene Kieselsäure mit Trübungsmittel, wird in einen an drei Seiten versiegelten Beutel aus Hochbarrierefolie 9 eingefüllt; dieser wird über die verbleibende Öffnung evakuiert und versiegelt. Währenddem oder anschließend erfolgt die Formung der Platten 1 noch innerhalb der Vakuumkammer mit Preßstempeln (bspw. nach Art einer Matrize und einer Patrize), welche die erfindungsgemäße Form aufweisen. Bei dieser Herstellungsart grenzen die Siegelnähte bzw. Schweißlaschen 11 direkt an die Stirnseite 6 des Kerns 2 des Dämmkörpers 1 an.

Alternativ kann die Formung des Kerns 2 auch vor dem Evakuiervorgang außerhalb der Vakuumkammer erfolgen.

Alternativ kann aber auch der Folienbeutel 9 aus einer einzigen Folie 10 hergestellt werden, wobei dann vorzugsweise eine Siegelnaht über die Fläche der Vakuumdämmplatte verläuft. Zwei weitere Siegel- oder Schweißnähte an einander gegenüber liegenden Stirnseiten 6 des Kerns 2 der Platte 1 verlaufen senkrecht dazu. An diese stirnseitigen, gewöhnlich an den Plattenkern 2 eng anliegenden Siegelnähte 11 kann eine Befestigungslasche 12 angrenzen.

Bei der in Fig. 1 dargestellten, Kernform 2 weist der Randbereich 5 an den Ecken A und C eine relative Dicke von etwa 0,5 der Gesamtdicke des Dämmkörpers 1 in dessen zentralem Überlappungsbereich auf; der entsprechende Bereich an den Ecken B und D hat dagegen die Dicke Null. Genau an diesen Ecken B und D könnten beim fertigen Plattenverbund Wärmebrücken auftreten.

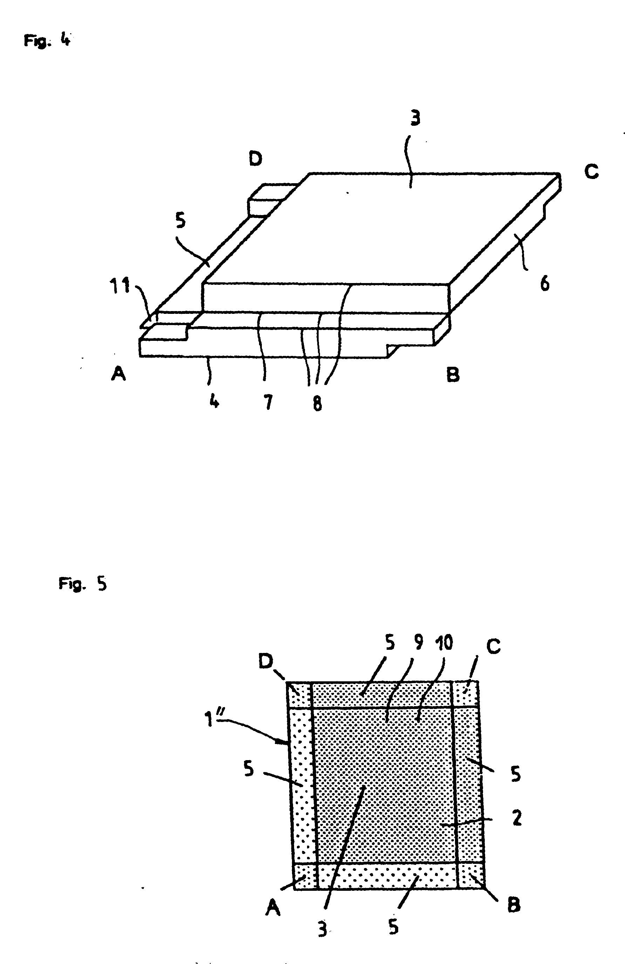

Deshalb wird bei der Ausführungsform 1" nach Fig. 4 und 5 ein Kern 2" mit einer anderen Geometrie verwendet: Dieser Kern 2" hat zwar auch eine flächige Gestalt mit einer Oberseite 3 und einer Unterseite 4; jedoch ist die relative, d.h., auf den maximalen Wert im Plattenzentrum normierte Dicke des wandnahen, querschnittlich verjüngten Randbereichs 5 in den Eckbereichen A und C jeweils von 0,5 auf 0,25 reduziert. Das verbleibende Material schließt dabei bspw. bündig mit der jeweils nächstgelegenen Ober- oder Unterseite 3, 4 ab und füllt somit das oberste bzw. unterste Viertel der Plattenhöhe aus. Die Eckbereiche B und D werden mit dem Kernmaterial des Dämmkörpers 1" belegt, und zwar ebenfalls mit einer relativen Dicke von je einem Viertel der Plattenmaximaldicke. Diese Dämmbereiche B, D sind gegenüber den anderen Eckbereichen A, C hinsichtlich ihrer Höhenlage versetzt, insbesondere zur Plattenmitte hin.

In den Randbereichen 5 weist die rundumlaufende Stirnseite 6 des Kerns 2" jeweils zur Oberseite 3 oder zur Unterseite 4 hin geöffnete Hohlkehlen 7 auf, die vorzugsweise mit abgerundeten Kanten 8 versehen sind.

Auch dieser Kern 2" ist in eine luftdichte Folie 9 eingehüllt, evakuiert und sodann hermetisch verschlossen, um das enthaltene Vakuum zu konservieren. Die Umhüllungsfolie 9 kann bspw. durch zwei aufeinandergelegte Einzelfolien 10 gebildet sein, von denen eine an der Oberseite 3 des Kerns 2 liegt, die andere an dessen Unterseite 4. An dem umlaufenden Rand 6 der Kernplatte 2" werden diese Folienlagen 10 dicht miteinander verschweißt und bilden eine Tasche, worin der Kern 2" aufgenommen ist. Vor dem vollkommenen Verschließen dieser Tasche wird deren innerer, von dem Kern 2" gefüllter Hohlraum evakuiert. Dabei ergibt sich eine rundumlaufende Schweißlasche 11, die den Umfang 6 des fertigen Dämmkörpers 1" auf vier Seiten als Vieleck, vorzugsweise Viereck, insbesondere als Rechteck, umschreibt. Die Ecken dieses Vier- oder Rechtecks sind in Fig. 4 mit A, B, C und D bezeichnet.

Diese Siegellasche 11 steht vom Dämmkörper 1" seitlich steht ab und weist eine typische Breite von etwa 1 cm auf. Im Gegensatz zum üblichen Verfahren muß die abstehende Siegellasche 11 eines erfindungsgemäßen Dämmkörpers 1" jedoch nicht umgebogen und an den Grundkörper herangefaltet werden.

Im Rahmen eines alternativen Verfahrens kann auch ein Folienbeutel 9 aus einer einzigen Folie hergestellt werden, so dass eine Siegelnaht 11 über eine Grundfläche des fertigen, plattenförmigen Dämmkörpers 1" verläuft; senkrecht dazu liegen zwei weitere Siegelnähte 11 an zwei Kanten 6 der Platte 1". Diese beiden Siegelnähte 11 müssen ebenfalls nicht umgefaltet werden.

Die beschriebene Form eines Kerns 2" lässt sich leicht durch Pressen einer Pulverschüttung mit einer entsprechenden Pressform herstellen. Eine andere Möglichkeit ist das Ausfräsen der beschriebenen Form aus einer Platte des Dämmmaterials von der Größe des Rechteckes ABCD.

Dämmkörper 1" mit solchen Kernen 2" lassen sich derart zu einem Plattenverbund zusammensetzen, dass in allen Randbereichen 5 einschließlich der einander überlappenden Eckbereiche A, B, C, D die selbe Plattenstärke durchgehend ist. Dabei überlappen sich an den Stoßfugen zwischen zwei Dämmkörpern 1" jeweils deren gerade Randbereiche 5; dort, wo vier Dämmkörper 1" mit je einer Ecke A, B, C, D zusammenstoßen, liegen alle diese vier Eckbereiche A, B, C, D übereinander. Insgesamt verbleibt daher nirgends eine Wärmebrücke.

Häufig wird ein Plattenverbund reihenweise verlegt, beginnend bspw. mit einer untersten Reihe an einer zu dämmenden Wand. Wenn eine Reihe fertig gestellt ist, wird eine nächste Reihe an die freien Kanten der zuvor verlegten Reihe angeschlossen. Unter die vom Untergrund abgehobenen Kanten einer Anfangsplattenreihe kann z.B. eine konventionelle Schaumdämmplatte der relativen Dicke 0,5 gelegt werden, damit der dortige Hohlraum geschlossen wird. Alternativ können für eine anfängliche Plattenreihe auch Dämmkörper 1" verwendet werden, welche an einer Kante 16 keinen querschnittlich verjüngten Randbereich 5 aufweisen. Das gleiche gilt auch für eine linke (oder rechte) Anfangsspalte des betreffenden Plattenverbunds. Ähnliches gilt für die jeweils zuletzt verlegten Dämmkörper 1 ".

Im allgemeinen Fall müssen die beiden Stufen eines Dämmkörpers 1" nicht gleich groß sein. Wenn die relative Stärke eines ersten Randbereichs 5 als h bezeichnet wird, sollte der diametral gegenüberliegende Randbereich 5 eine relative Stärke von (1-h) aufweisen, so dass die relative Gesamtstärke der übereinander liegenden Randbereiche 5 dabei etwa gleich 1 ist.

Ähnliches gilt für die Eckbereiche A, B, C, D eines erfindungsgemäßen Dämmkörpers 1"; deren relative Stärken werden durch folgende Bedingungen festgelegt: Wenn sich die relativen Stärken der Eckbereiche A und B zu einem Wert h₁ ergänzen, sollte die Summe der relativen Dicken der Eckbereiche C und D (1-h₁) betragen.

Wenn außerdem h₁ = h, ist sichergestellt, dass im Plattenverbund pro verlegter Plattenreihe jeweils eine durchgehende Stufe von konstanter Höhe h entsteht. Es lassen sich damit im Plattenverbund sowohl Kreuzfugen als auch T-Fugen darstellen.

Durch die zuletzt beschriebene Kernform wird in den Eckbereichen A, B, C, D die Geometrie glatter und die Folie 9 daher weniger Belastungen unterworfen. Der Zugstress, dem die Hüllfolie 9 ausgesetzt ist, kann weiter verringert werden, wenn die Außenkanten 6 und die kantenförmigen Übergänge in den Randbereichen 5 abgerundet sind. Die Form der Abrundung soll dabei jeweils so gewählt werden, dass das Gesamtvolumen des Dämmkörpers 1" erhalten bleibt und sich im Überlapp des Plattenverbundes die Stufenfalze jeweils ergänzen. Dies wird bspw. erreicht, wenn konkave und konvexe Kanten jeweils etwa gleiche Krümmungsradien aufweisen.

Für die erfindungsgemäße Form sind vorwiegend dünnere Dämmkörper 1" geeignet, da sich die Hüllfolie 9 in diesem Fall noch gut an die Form der Kernplatten 2" anpassen kann. Bevorzugte Plattenstärken sind 15 bis 20 mm, besonders bevorzugt 10 bis 15 mm. Bei diesen Plattendicken wird die Hüllfolie 9 am wenigsten durch Zug, Knittern und weitere mechanische Belastungen gestreßt.

Bspw. bei einer effektiven Grundfläche oder Basisfläche eines Dämmkörpers 12 von z.B. 80 cm x 80 cm liegen typische Breiten der Randbereiche 5 bei mehr als 3 cm, vorzugsweise bei 5 cm oder mehr, insbesondere bei bis zu etwa 10 cm.

Wenn man davon ausgeht, dass sich die Randbereiche 5 im fertigen Plattenverbund um mindestens 2 cm überdecken sollen, lassen sich damit die Auslegegrößen jeder Formplatte um bis zu 7 cm variieren. Dabei ist eine typische Breite einer Siegellasche !1 von 1 cm schon berücksichtigt. Bei maximal auseinandergezogenen Dämmkörpern 1" von jeweils etwa 7 cm in beiden Richtungen ergibt sich an den kritischen Eckbereichen A, B, C, D ein nicht überlapptes Feld von 7 cm x 7 cm. Dieser Bereich ist jedoch immer noch mit einer einfachen Lage der Vakuumdämmung belegt, wenigstens mit der relativen Stärke 0,25. Rechnerisch erhöht sich der Wärmedurchgang in einem Verbund mit der maximalen Verschiebung 7 cm x 7 cm gegenüber unverschobenen Stufenfalzplatten der Basisgröße 87 cm x 87 cm nur um 8 %. Auch der Einfluss einer Siegellasche 11 ist verschwindend gering, wenn sie an dem Randbereich 5, insbesondere an dessen Stirnseite 6 zu liegen kommt und deswegen die benachbarten Dämmkörper 1" um eine Breite von etwa 1 cm auseinander gezogen werden.

Mit den erfindungsgemäßen Dämmkörpern 1" lassen sich im Verbund Bodenflächen praktisch wärmebrückenfrei belegen. Es sind nur wenige Standardmaße nötig, um den größten Teil einer Fläche abzudecken, da sich die Abstände zwischen den Formplatten jeweils um einige Zentimeter vergrößern lassen. So kann ein weiteres Grundmaß von z.B. 50 cm x 30 cm mit ebenfalls etwa 10 cm breiten Randstreifen 5 ausreichen (Gesamtgröße 60 cm x 40 cm), um die meisten Belegungsfälle abzudecken.

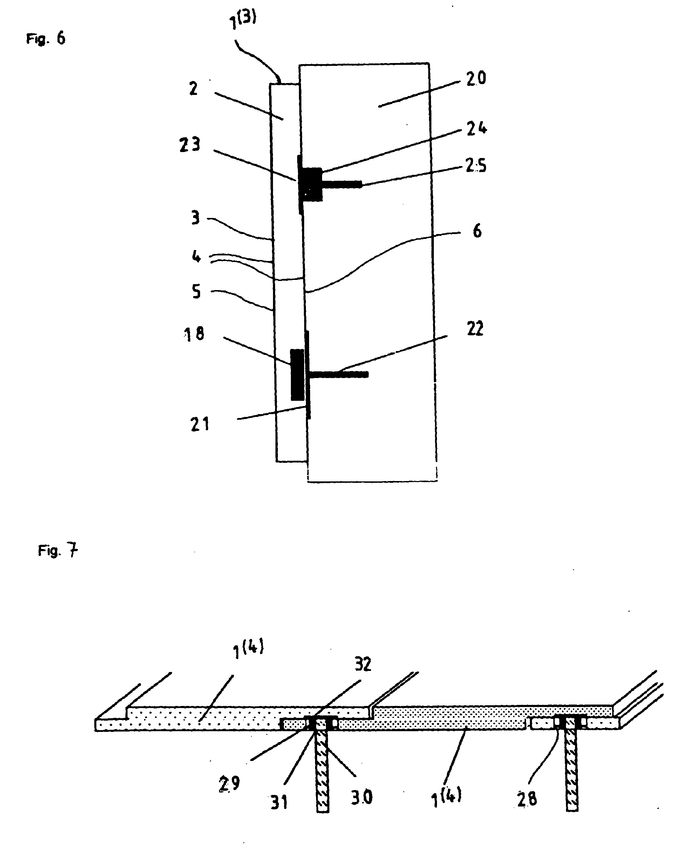

Gemäß einer weiteren Ausgestaltung einer erfindungsgemäßen Dämmplatte 1⁽³⁾, die in Fig. 6 wiedergegeben ist, werden ein oder mehrere Magnete 18 in (je) eine Vertiefung 19 der Kernplatte 2⁽³⁾ eingelegt; daraufhin wird die Kernplatte 2⁽³⁾ mit einer vakuumdichten Hochbarrierefolie 9 umhüllt, evakuiert und versiegelt. Der oder die Magnete 18 sitzen direkt unter der Hüllfolie 9, so dass ihre Magnetkraft bzw. magnetische Feldstärke an der Plattenoberfläche 9 maximal ist und auf dort ggf. vorhandene, magnetisierbare Materialien ungeschmälert einwirkt.

Bevorzugt wird der Kern 2⁽³⁾ vor dem Umhüllen vorgeformt, insbesondere aus einem Pulver gepreßt; andererseits kann das Kernmaterial aber auch in pulverförmigem Zustand in eine Folientasche 9 eingefüllt und erst anschließend geformt werden, insbesondere durch Pressen der gefüllten und vorzugsweise evakuierten Folientasche 9.

Je nach dem gewählten Herstellungsverfahren ist mit den Magneten 18 anders zu verfahren. Im ersteren Fall muß bei oder nach der Herstellung der Kernplatte 2⁽³⁾ darin mindestens eine Vertiefung 19 für je einen Magneten 18 geschaffen werden; im letzteren Fall wird der Magnet vor oder nach dem Einfüllen des Pulvers in die Folientasche 9 eingebracht und bspw. an der Innenseite der Umhüllungsfolie 9 fixiert, bspw. festgeklebt.

Der fertige Dämmkörper 1⁽³⁾ ist bereits für das Anbringen an einem Untergrund mit einer metallischen, magnetisierbaren Oberfläche, z.B. eine Stahlbehälterwand, geeignet.

Ein Untergrund 20 mit einer nicht magnetisierbaren Oberfläche, wie bspw. die Außenwand eines Gebäudes aus Stein oder Holz, muß an der Befestigungsstelle noch mit einem magnetisierbaren Material, z.B. einem Blech 21 aus Stahl oder einem anderen, ferromagnetischen Material, ausgerüstet werden, vgl. Fig. 6 unten. Das Metallblech 21 kann bspw. mit wenigstens einem Loch versehen sein, welches von (je) einer Schraube 22 durchgriffen wird, die wiederum mittels eines Dübels im Untergrund 20 befestigt werden kann. Andere Befestigungsmittel sind denkbar, wie bspw. Stifte mit (aufgerauhtem) Schaft, welche in (je) eine Bohrung des Untergrundes 20 eingeklebt, -gegipst oder zementiert werden.

Der Dämmkörper 1⁽³⁾ wird anschließend von (dem) Magneten 18 an der Befestigungsstellen gehalten, indem der oder die Magnete 18 das/die magnetisierbare(n) Blech(e) 21 anziehen. Anstelle eines magnetisierbaren Eisen- oder Blechteils 21 kann an der Oberfläche des Untergrundes 20 befestigter Magnet mit anziehender Polung zur Anwendung kommen.

Bei einer anderen Ausführungsform der Erfindung werden bei der Herstellung des Dämmkörpers 1⁽³⁾ vorzugsweise flache, d.h. blechförmige, magnetisierbare Metallteile 23 in die Hüllfolie 9 eingelegt. Diese Metallteile 23 befinden sich gemäß Fig. 6 oben vorzugsweise zwischen der Hüllfolie 9 des Dämmkörpers 1⁽³⁾ und dessen Dämmkern 2⁽³⁾. Für sehr flache Metallteile 23 erübrigt es sich, dieselben in eine Vertiefung einzulegen; andererseits könnte auch in diesem Fall eine Vertiefung vorgesehen sein. Beim nachträglichen Formen des Kerns 2⁽³⁾ innerhalb einer Folientasche 9 entsteht eine solche flache, muldenförmige Vertiefung automatisch.

Die Befestigung eines solchermaßen mit einem oder mehreren inneren Metallteilen 23 ausgestatteten Dämmkörpers 1⁽³⁾ erfolgt mittels äußerer Magnete 24, welche die inneren Metallteile 23 anziehen und dadurch eine kraftschlüssige Verbindung schaffen. Die äußeren Magnete 24 selbst sind über geeignete Befestigungsmittel, insbesondere Schrauben 25, mit dem Untergrund 20, insbesondere der Wand oder der Decke, verbunden. Der Befestigungsort eines solchen äußeren Magneten 24 ist derart gewählt, dass das innenliegende Metallteil 23 möglichst exakt auf dem äußeren Magneten 24 zu liegen kommt und von diesem angezogen wird. Um den Magnet 24 auf einfache Weise an einem Untergrund 20, bspw. einer Wand oder Decke, befestigen zu können, werden vorzugsweise ringförmige Magnete 24 verwendet, die leicht von dem Schaft einer Schraube 25, einem Nagel, Dübel oder Anker durchdrungen und damit am Untergrund 20 verankert werden können, wobei der Kopfdurchmesser des Befestigungsmittels im Gegensatz zu dessen Schaft größer ist als der Durchmesser der Ausnehmung in dem ringförmigen Magneten 24. Um einen flächigen Abschluss zu erzielen, kann der Magnet 24 im Untergrund versenkt werden, vgl. Fig. 6. Vorzugsweise ist diese Variante für quaderförmige Platten anzuwenden.

Beide Varianten der erfindungsgemäße Ausrüstung eines Vakuumpaneels 1⁽³⁾ mit Magneten 18 oder Metallteilen 23 erleichtern dessen Befestigung an senkrechten Fassaden oder sogar hängend an Decken.

Ein weiteres Ausführungsbeispiel eines Dämmkörpers 1⁽⁴⁾ ist in Fig. 7 dargestellt. Hier kommt eine Vakuumdämmplatte 1⁽⁴⁾ mit einem abgestuften, d.h. querschnittlich verringerten Rand 5 zur Anwendung, wobei einander gegenüberliegende Randbereiche 5 nicht in einer gemeinsamen, ebenen Flucht liegen; vielmehr ist der eine Randbereich 5 zum Untergrund 20 hin verlagert bzw. schließt vorzugsweise mit der Unterseite 4 des Dämmkörpers 1⁽⁴⁾ bündig ab, während der gegenüberliegende Randbereich 5 vom Untergrund 20 weg verlagert ist bzw. mit der Oberseite 3 des Dämmkörpers 1⁽⁴⁾ abschließt.

Der dem Untergrund 20 zugewandte, stufenförmige Randbereich 5 einer Platte 1⁽⁴⁾ wird schon bei der Herstellung des Folienbeutels 9 für die Vakuumdämmung mit einem Loch 28 versehen. Zu diesem Zweck werden zunächst die beiden aufeinanderliegenden Folien 10 des Folienbeutels 9 kreisförmig miteinander versiegelt und ein Loch 28 eingestanzt. Der Durchmesser des Lochs 28 in dem Foliebeutel 9 wird höchstens so groß gewählt, dass noch ausreichend gesiegelte Fläche 29 vorhanden ist. Durch das Loch 28 wird eine Schraube 30, insbesondere eine Dübelschraube, oder ein Dübel, etc. selbst, geführt.

Diese Schraube 30, Dübel od. dgl. trägt in ihrem Kopfbereich einen Teller oder Ring, der als Magnet 31 ausgebildet ist. Bevorzugt wird dafür eine runde Magnetscheibe 31 mit einem Loch in der Mitte benutzt, welches von dem Schaft der Schraube 30 durchgriffen wird, um damit den Magnet 31 am Untergrund 20 zu befestigen. Die Höhe des Magneten 31 sollte gerade so gewählt werden, dass er nach dem Einlegen und Fixieren in der Aussparung 28 des Dämmkörpers 1⁽⁴⁾ in etwa eben mit der Oberseite des unteren, querschnittlich reduzierten Randbereichs 5 abschließt. Auf diesen an dem Untergrund 20 anliegenden Randbereich 5 kann nun der dazu komplementäre Randbereich 5 an der gegenüberliegenden Seite eines weiteren Dämmkörpers 1⁽⁴⁾ aufgesetzt werden. Damit die beiden Dämmkörper 1⁽⁴⁾ kraftschlüssig miteinander verbunden sind, ist nach Fig. 7 im Inneren des Randbereichs 5 des Dämmkörpers 1⁽⁴⁾ über der Stelle, die bei der Montage genau an der Stelle zu liegen kommt, wo an dem ersten Dämmkörper 1⁽⁴⁾ der Magnet 31 sitzt, also oberhalb von dessen Ausnehmung 28, ein magnetisierbares Metallplättchen 32 eingebaut. Dieses Metallplättchen 32 hat einen bevorzugten Durchmesser von etwa 40 mm und eine Stärke von etwa 0,5 mm bis 2 mm.

Dadurch wird nun auch der in dem Überlappungsbereich der Ränder 5 obere bzw. wandfern liegende Dämmkörper 1⁽⁴⁾ vom Magnetkopf 31 angezogen und dadurch mit dem Untergrund 20, bspw. einer Wand, kraftschlüssig verbunden.

Der Magnet 31 und die magnetisierbare Scheibe 32 können auch miteinander vertauscht angeordnet sein, d.h. der Magnet 31 sitzt in dem oberen Randbereich 5 des Dämmkörpers 1⁽⁴⁾ an der Stelle, die beim fertigen Plattenverbund das Loch 28 in dem unteren Randbereich 5 abdeckt; in diesem Fall besteht der Dübelteller bzw. ggf. verbreiterte Kopf der Schraube 30 aus einem magnetisierbaren Teil, aber nicht vormagnetisierten Teil. Es ist sogar denkbar, zwei magnetische Teile 31, 32 zu verwenden, wenn diese derart orientiert sind, dass jeweils entgegengesetzte Magnetpole einander zugewandt sind und einander anziehen.

Als Magnete 18, 24, 31, 32, insbesondere Ringmagnetscheiben, können übliche Ferritmagnete verwendet werden. Aufgrund ihrer eher geringen Anziehungskraft sind sie am besten als Montagehilfe zur Fixierung der Formplatten bei einer Verklebung geeignet. Nach dem Aushärten der Verklebung übernimmt diese dann die Haltefunktion.

Stark haftende Magnete 18, 24, 31, 32, insbesondere Ringmagnetscheiben, auf der Basis von Neodym sind dagegen geeignet, die Formplatten an einer Wand oder einer Decke dauerhaft zu befestigen. Dennoch ist natürlich zusätzlich zu den Magnethalterungen 18, 24, 31, 32 noch zumindest auf einer Teilfläche eine Klebung möglich, um den festen Halt der Vakuumdämmplatten 1⁽⁴⁾ am Untergrund 20 zu gewährleisten.

Die Erfindung erlaubt mannigfaltige Ausprägungen. Bspw. kann ein Kern 2 derart hergestellt werden, dass an einer bis zu drei Ecken A, B, C, D je eine Ausnehmung 8 vorgesehen ist. Dennoch wird eine Folienumhüllung 9 über sämtliche Eckbereiche A, B, C, D hinweg gespannt. Die ausgesparten Eckbereiche 8 werden jedoch von dem eigentlichen Kern 2 durch je eine Schweißnaht vollständig, d.h. luftdicht abgetrennt und sodann mit je einer Durchbrechung versehen, zum Hindurchstecken des Schaftes eines bspw. schraubenförmigen Befestigungsmittels. Dieses kann an einem Untergrund 20 verankert werden, und sein Kopf übergreift die übereinanderliegenden, abgetrennten Folienbereiche in den ausgesparten Eckbereichen 8 der aneinandergrenzenden Dämmkörper 1. Ferner ist der Kopf dieser Befestigungsschraube magnetisch oder magnetisierbar und kann daher mit einem magnetisierbaren Metallblech oder -körper oder einem Magneten zusammenwirken, der innerhalb der nicht ausgesparten Ecke A, B, C, D des darauf liegenden, vierten bzw. obersten Dämmkörpers 1 - vorzugsweise unterhalb von dessen Umhüllungsfolie 9 - festgelegt ist. In diesem Fall sollte der nicht ausgesparte Eckbereich A, B, C, D eine - auf die maximale Plattendicke bezogene, d.h. relative Plattendicke von 1 oder zumindest annähernd 1 aufweisen.

## Patentansprüche

1. Dämmkörper (1;1';1";1⁽³⁾;1⁽⁴⁾) aus einem offenporigen, von einer Folie (9) vollständig umhüllten und evakuierten Kern (2) mit einer von einem Parallelflach abweichenden Form, umfassend zwei etwa entlang von zueinander parallelen Ebenen verlaufende Oberflächenbereiche (3,4), welche sich in einem zentralen Bereich überlappen, wobei der/die Folienrandbereich(e) entlang von wenigstens einer Schweißnaht miteinander verbunden ist/sind, **dadurch gekennzeichnet, dass** jeder der beiden, zueinander etwa parallelen Oberflächenbereiche (3,4) des Dämmkörpers (1;1';1";1⁽³⁾;1⁽⁴⁾)
a) die selbe Fläche, d.h. Größe, aufweist,
b) jeweils wenigstens einen Randbereich (5) aufweist, in dem er von dem anderen Oberflächenbereich (4,3) nicht überlappt wird, sowie
c) im Hinblick auf den Querschnittsverlauf in den Randbereichen (5) derart gestaltet ist, dass ein zentraler, durch einander diametral gegenüberliegende Stirnseitenabschnitte (6) mit differenzierbarem Verlauf gelegter Querschnitt durch die Umhüllungsfolie (9) asymmetrisch ist bezüglich einer zu der Paneelgrundfläche lotrechten Mittelsenkrechten, d.h., nicht spiegelsymmetrisch.

2. Dämmkörper nach Anspruch 1, **dadurch gekennzeichnet, dass** der gesamte Kern (2) bzw. die gesamte Füllung aus dem selben Material besteht, bspw. aus pyrogener Kieselsäure, Fällungskieselsäure oder Perliten, oder aus Mischungen derselben, gegebenenfalls mit zugesetzten Trübungsmitteln und Trocknungsmitteln.

3. Dämmkörper nach Anspruch 1 oder 2, **dadurch gekennzeichnet, dass** der gesamte Kern (2) aus einem einzigen Stück bzw. Preßling besteht.

4. Dämmkörper nach einem der vorhergehenden Ansprüche, **dadurch gekennzeichnet, dass** der Dämmkörper (1;1';1";1⁽³⁾;1⁽⁴⁾) im Bereich seiner Stirnseiten (6) frei von Nuten ist.

5. Dämmkörper nach einem der vorhergehenden Ansprüche, **dadurch gekennzeichnet, dass** die einander gegenüberliegenden Bereiche (5) zwischen einer Stirnseite (6) und der jeweils nächstgelegenen Begrenzungslinie des zentralen Überlappungsbereichs zueinander komplementäre Querschnitte aufweisen.

6. Dämmkörper nach Anspruch 5, **dadurch gekennzeichnet, dass** die Gesamtdicke der hinsichtlich der Komplementarität miteinander korrespondierenden Abschnitte der einander gegenüberliegenden Bereiche (5) zwischen einer Stirnseite (6) und der jeweils nächstgelegenen Begrenzungslinie des zentralen Überlappungsbereichs etwa gleich dem Abstand zwischen den beiden Oberflächenbereichen (3,4) in dem zentralen Überlappungsbereich ist.

7. Dämmkörper nach einem der vorhergehenden Ansprüche, **dadurch gekennzeichnet, dass** alle vier verjüngten Randbereiche (5) zwischen jeweils einer Stirnseite (6) und der jeweils nächstgelegenen Begrenzungslinie des zentralen Überlappungsbereichs jeweils eine konstante Stärke aufweisen, vorzugsweise untereinander gleich dick sind, insbesondere jeweils etwa halb so dick sind wie die Gesamtplattenstärke (h = 0,5).

8. Dämmkörper nach einem der vorhergehenden Ansprüche, **dadurch gekennzeichnet, dass** in den unten, d.h. wandnah liegenden Randbereichen (5) mindestens (je) eine Öffnung durch die Vakuumdämmung (2) hindurch vorgesehen ist, durch die der Dämmkörper (1;1';1";1⁽³⁾;1⁽⁴⁾) mit dem Untergrund (16) verbunden werden kann.

9. Dämmkörper nach einem der vorhergehenden Ansprüche, **dadurch gekennzeichnet, dass** in den wandfern liegenden Randbeeichen (5) eine magnetische oder magnetisierbare Metallplatte (17) dort zwischen Hüllfolie (9) und Dämmkern (2) eingelegt ist, wo im Plattenverbund der wandferne Randbereich (5) auf einem magnetischen oder magnetisierbaren Befestigungsmittel (28) zu liegen kommt, mit welchem der wandnahe Randbereich (5) des vorher verlegten Dämmkörpers (1;1';1";1⁽³⁾;1⁽⁴⁾) befestigt ist.

10. Dämmkörper nach einem der vorhergehenden Ansprüche, **dadurch gekennzeichnet, dass** wenigstens drei Eckbereiche (A,B,C,D) des Dämmkerns (2) eine nichtverschwindende Dicke aufweisen, insbesondere mindestens 5% der Gasamtdicke des Dämmkerns (2).

11. Dämmkörper nach einem der vorhergehenden Ansprüche, **dadurch gekennzeichnet, dass** wenigstens drei, vorzugsweise alle Eckbereiche (A,B,C,D) des Dämmkerns (2) eine Dicke aufweisen, die kleiner ist als die Dicke des zentralen Überlappungsbereichs der beiden zueinander parallelen Oberflächenbereiche, insbesondere höchstens 95% der Gasamtdicke des Dämmkerns (2).

12. Dämmkörper nach einem der vorhergehenden Ansprüche, **dadurch gekennzeichnet, dass** die Summe der Dicken aller Eckbereiche (A,B,C,D) des Dämmkörpers (1;1'; 1"; 1⁽³⁾;1⁽⁴⁾) nicht größer ist als die Gesamtdicke des Dämmkörpers (1;1';1";1⁽³⁾;1⁽⁴⁾).

13. Dämmkörper nach einem der vorhergehenden Ansprüche, mit der relativen (genormten) Plattenstärke der Gesamtplatte (1;1'; 1"; 1⁽³⁾;1⁽⁴⁾) von 1, mit
a) jeweils an einen gemeinsamen Eckbereich (A) angrenzenden und in einer unteren Plattenlage von der relativen Dicke h liegenden Verjüngungsbereichen (5), sowie mit
b) jeweils an einen gegenüberliegenden Eckbereich (C) angrenzenden und in einer oberen Plattenlage von der relativen Dicke (1-h) liegenden Verjüngungsbereichen (5),
**dadurch gekennzeichnet, dass**
c) die Summe der relativen Dicken zweier benachbarter Eckbereiche (A,B) etwa der relativen Dicke h entspricht, sowie
d) die Summe der relativen Dicken zweier weiterer Eckbereiche (C,D) jeweils etwa der relativen Dicke (1-h) entspricht.

14. Dämmkörper nach einem der vorhergehenden Ansprüche, **dadurch gekennzeichnet, dass** wenigstens zwei, vorzugsweise benachbarte Eckbereiche (A,B) jeweils gleich dick sind.

15. Dämmkörper nach einem der vorhergehenden Ansprüche, **dadurch gekennzeichnet, dass** die Eckbereiche (A,B,C,D) von unten nach oben in einer Reihenfolge A-B-D-C oder A-D-B-C angeordnet sind, so dass zwei einander gegenüber liegende Eckbereiche (A,C) mit der Oberseite (3) bzw. mit der Unterseite (4) des Dämmkörpers (1;1';1";1⁽³⁾;1⁽⁴⁾) bündig abschließen.

16. Dämmkörper (1;1';1";1⁽³⁾;1⁽⁴⁾) nach einem der vorhergehenden Ansprüche, **dadurch gekennzeichnet, dass** wenigstens ein Folienbereich (12), der durch wenigstens (je) eine Siegelnaht (11) von dem evakuierten Raum innerhalb des Dämmkörpers (1;1';1";1⁽³⁾;1⁽⁴⁾) vollständig abgetrennt ist, (jeweils) wenigstens eine Ausnehmung (13) aufweist zum Hindurchstecken (je) eines Befestigungskörpers (15), zwecks (kraftschlüssiger) Festlegung des Folienbereichs (12) und des damit verbundenen Dämmkörpers (1;1';1";1⁽³⁾;1⁽⁴⁾) an einem darunter befindlichen Untergrund (16).

17. Dämmkörper nach Anspruch 16, **dadurch gekennzeichnet, dass** eine Seite eines von dem evakuierten Dämmkörper (1;1';1";1⁽³⁾;1⁽⁴⁾) vollständig getrennten Folienteils an eine Siegelnaht der den Dämmkörper (1;1';1";1⁽³⁾;1⁽⁴⁾) umhüllenden Folie angrenzt, wobei das Folienteil samt Durchsteckausnehmung auf der dem evakuierten Dämmkörper (1;1';1";1⁽³⁾; 1⁽⁴⁾) gegenüber liegenden Seite liegt.

18. Dämmkörper nach einem der Ansprüche 16 oder 17, **dadurch gekennzeichnet, dass** ein eine Durchsteckausnehmung (13) aufweisender Folienbereich (12) aus zwei übereinander liegenden Folien (10) besteht.

19. Dämmkörper nach einem der Ansprüche 16 bis 18, **dadurch gekennzeichnet, dass** die beiden (aufeinanderliegenden) Folien (10) eines eine Durchsteckausnehmung (13) aufweisenden Folienbereichs (12) zumindestens teilweise miteinander verschweißt sind.

20. Dämmkörper nach einem der vorhergehenden Ansprüche, **dadurch gekennzeichnet, dass** er mit Magnetkraft an einem Untergrund (16,20) befestigt oder befestigbar ist.

21. Dämmkörper nach Anspruch 20, **dadurch gekennzeichnet, dass** im Inneren des Dämmkörpers (1;1';1";1⁽³⁾;1⁽⁴⁾), insbesondere zwischen dessen Außenhülle (9) und seinem Dämmkern (2), wenigstens ein Magnet (18) eingebaut ist, der ein außerhalb des Dämmkörpers (1;1';1";1⁽³⁾;1⁽⁴⁾) liegendes magnetisches oder magnetisierbares Blech- oder Metallteil (21) anzieht, welches fest mit einem Untergrund (16,20) verbunden ist.

22. Dämmkörper nach einem der Ansprüche 20 oder 21, **dadurch gekennzeichnet, dass** im Inneren des Dämmkörpers (1;1';1";1⁽³⁾;1⁽⁴⁾), insbesondere zwischen dessen Außenhülle (9) und seinem Dämmkern (2), ein magnetisierbares, vorezugsweise blechförmiges Metallteil (23) angeordnet ist, das von einem außerhalb des Dämmkörpers (1;1';1";1⁽³⁾;1⁽⁴⁾) liegenden Magneten (24) angezogen wird, der fest mit einem Untergrund (16,20) verbunden ist.

23. Verfahren zur Herstellung eines Dämmkörpers (1;1';1";1⁽³⁾;1⁽⁴⁾) aus einem offenporigen, von einer Folie (9) vollständig umhüllten und evakuierten Kern (2) mit einer von einem Parallelflach abweichenden Form, umfassend zwei etwa entlang von zueinander parallelen Ebenen verlaufende Oberflächenbereiche (3,4), welche sich in einem zentralen Bereich überlappen, wobei der/die Folienrandbereich(e) entlang von wenigstens einer Schweißnaht miteinander verbunden ist/sind, und wobei jeder der beiden, zueinander etwa parallelen Oberflächenbereiche (3,4) des Dämmkörpers (1;1';1";1⁽³⁾;1⁽⁴⁾) die selbe Fläche, d.h. Größe, aufweist, ferner jeweils wenigstens einen Randbereich (5) aufweist, in dem er von dem anderen Oberflächenbereich (4,3) nicht überlappt wird, sowie im Hinblick auf den Querschnittsverlauf in den Randbereichen (5) derart gestaltet ist, dass ein zentraler, durch einander diametral gegenüberliegende Stirnseitenabschnitte (6) mit differenzierbarem Verlauf gelegter Querschnitt durch die Umhüllungsfolie (9) asymmetrisch ist bezüglich einer zu der Paneelgrundfläche lotrechten Mittelsenkrechten, d.h., nicht spiegelsymmetrisch, nach einem der Ansprüche 1 bis 22, **dadurch gekennzeichnet, dass** in einer vakuumdichten Folie (9) das Dämmpulver eingefüllt, evakuiert, die Hülle (9) verschlossen und in einer evakuierten Kammer verpresst und dabei geformt wird.

24. Verwendung mehrerer, vorzugsweise identischer Dämmkörper (1;1';1";1⁽³⁾;1⁽⁴⁾) aus einem offenporigen, von einer Folie (9) vollständig umhüllten und evakuierten Kern (2) mit einer von einem Parallelflach abweichenden Form, umfassend zwei etwa entlang von zueinander parallelen Ebenen verlaufende Oberflächenbereiche (3,4), welche sich in einem zentralen Bereich überlappen, wobei der/die Folienrandbereich(e) entlang von wenigstens einer Schweißnaht miteinander verbunden ist/sind, und wobei jeder der beiden, zueinander etwa parallelen Oberflächenbereiche (3,4) des Dämmkörpers (1;1';1";1⁽³⁾;1⁽⁴⁾) die selbe Fläche, d.h. Größe, aufweist, ferner jeweils wenigstens einen Randbereich (5) aufweist, in dem er von dem anderen Oberflächenbereich (4,3) nicht überlappt wird, sowie im Hinblick auf den Querschnittsverlauf in den Randbereichen (5) derart gestaltet ist, dass ein zentraler, durch einander diametral gegenüberliegende Stirnseitenabschnitte (6) mit differenzierbarem Verlauf gelegter Querschnitt durch die Umhüllungsfolie (9) asymmetrisch ist bezüglich einer zu der Paneelgrundfläche lotrechten Mittelsenkrechten, d.h., nicht spiegelsymmetrisch, nach einem der Ansprüche 1 bis 22, zur Herstellung eines Plattenverbundes, derart, dass sich die dünn ausgeführten Randbereiche (5) benachbarter Dämmkörper (1;1';1"; 1⁽³⁾; 1⁽⁴⁾) teilweise oder ganz überlappen.

25. Verwendung mehrerer, vorzugsweise identischer Dämmkörper (1;1';1";1⁽³⁾;1⁽⁴⁾) aus einem offenporigen, von einer Folie (9) vollständig umhüllten und evakuierten Kern (2) mit einer von einem Parallelflach abweichenden Form, umfassend zwei etwa entlang von zueinander parallelen Ebenen verlaufende Oberflächenbereiche (3,4), welche sich in einem zentralen Bereich überlappen, wobei der/die Folienrandbereich(e) entlang von wenigstens einer Schweißnaht miteinander verbunden ist/sind, und wobei jeder der beiden, zueinander etwa parallelen Oberflächenbereiche (3,4) des Dämmkörpers (1;1';1";1⁽³⁾;1⁽⁴⁾) die selbe Fläche, d.h. Größe, aufweist, ferner jeweils wenigstens einen Randbereich (5) aufweist, in dem er von dem anderen Oberflächenbereich (4,3) nicht überlappt wird, sowie im Hinblick auf den Querschnittsverlauf in den Randbereichen (5) derart gestaltet ist, dass ein zentraler, durch einander diametral gegenüberliegende Stirnseitenabschnitte (6) mit differenzierbarem Verlauf gelegter Querschnitt durch die Umhüllungsfolie (9) asymmetrisch ist bezüglich einer zu der Paneelgrundfläche lotrechten Mittelsenkrechten, d.h., nicht spiegelsymmetrisch, nach einem der Ansprüche 1 bis 22, zur Herstellung eines Plattenverbundes, derart, dass vier Ecken von vier Dämmkörpern (1;1';1";1⁽³⁾;1⁽⁴⁾) aufeinanderliegen.

26. Verwendung mehrerer, vorzugsweise identischer Dämmkörper (1;1';1";1⁽³⁾;1⁽⁴⁾) aus einem offenporigen, von einer Folie (9) vollständig umhüllten und evakuierten Kern (2) mit einer von einem Parallelflach abweichenden Form, umfassend zwei etwa entlang von zueinander parallelen Ebenen verlaufende Oberflächenbereiche (3,4), welche sich in einem zentralen Bereich überlappen, wobei der/die Folienrandbereich(e) entlang von wenigstens einer Schweißnaht miteinander verbunden ist/sind, und wobei jeder der beiden, zueinander etwa parallelen Oberflächenbereiche (3,4) des Dämmkörpers (1;1';1";1⁽³⁾;1⁽⁴⁾) die selbe Fläche, d.h. Größe, aufweist, ferner jeweils wenigstens einen Randbereich (5) aufweist, in dem er von dem anderen Oberflächenbereich (4,3) nicht überlappt wird, sowie im Hinblick auf den Querschnittsverlauf in den Randbereichen (5) derart gestaltet ist, dass ein zentraler, durch einander diametral gegenüberliegende Stirnseitenabschnitte (6) mit differenzierbarem Verlauf gelegter Querschnitt durch die Umhüllungsfolie (9) asymmetrisch ist bezüglich einer zu der Paneelgrundfläche lotrechten Mittelsenkrechten, d.h., nicht spiegelsymmetrisch, nach einem der Ansprüche 1 bis 22, zur Herstellung eines Plattenverbundes, derart, dass zwei Ecken von zwei Dämmkörpern (1;1';1";1⁽³⁾;1⁽⁴⁾) sowie eine Längslasche bzw. Randbereiche (5) eines dritten Dämmkörpers (1;1';1";1⁽³⁾;1⁽⁴⁾) übereinander liegen bzw. einander überlappen.
